# EUROPÄISCHE PATENTSCHRIFT

(11) **EP 3 411 190 B1**
(45) Veröffentlichungstag und Bekanntmachung des Hinweises auf die Patenterteilung: **21.10.2020**
(21) Anmeldenummer: 17702085.6
(22) Anmeldetag: 30.01.2017
(51) Int. Cl.: B25F 5/00

(54) **DIEBSTAHLSCHUTZMODUL FÜR EINE AKKUBETRIEBENE ELEKTROWERKZEUGMASCHINE UND AKKUBETRIEBENE ELEKTROWERKZEUGMASCHINE MIT EINEM DIEBSTAHLSCHUTZMODUL**
ANTI-THEFT MODULE FOR A RECHARGEABLE BATTERY-OPERATED ELECTRIC MACHINE TOOL, AND RECHARGEABLE BATTERY-OPERATED ELECTRIC MACHINE TOOL COMPRISING AN ANTI-THEFT MODULE
MODULE DE PROTECTION ANTIVOL POUR UNE MACHINE-OUTIL ÉLECTRIQUE FONCTIONNANT SUR BATTERIE ET MACHINE-OUTIL ÉLECTRIQUE FONCTIONNANT SUR BATTERIE, DOTÉE D'UN MODULE DE PROTECTION ANTIVOL

(30) Priorität: 01.02.2016 DE 102016201497
(43) Veröffentlichungstag der Anmeldung: 12.12.2018
(73) Patentinhaber: Robert Bosch GmbH, 70442 Stuttgart (DE)
(72) Erfinder: ESENWEIN, Florian, 70771 Leinfelden-Echterdingen (DE); HIRSCHBURGER, Wolfgang, 72762 Reutlingen (DE); BUEHLEN, Christoph, 73235 Weilheim (DE); EIREINER, Anna Verena, 86391 Stadtbergen (DE)
(86) Internationale Anmeldenummer: PCT/EP2017/051874
(87) Internationale Veröffentlichungsnummer: WO 2017/133991

(56) Entgegenhaltungen:
- WO-A1-2007/058596
- WO-A2-2013/014890
- DE-A1- 10 260 706
- DE-A1-102008 000 973
- US-A1- 2014 159 920
- US-A1- 2014 240 125
- US-B1- 6 536 536

## Beschreibung

Die Erfindung betrifft ein Diebstahlschutzmodul für eine akkubetriebene Elektrowerkzeugmaschine und eine akkubetriebene Elektrowerkzeugmaschine mit einem Diebstahlschutzmodul nach der Gattung der unabhängigen Ansprüche.

### Stand der Technik

Diebstahlschutzsysteme für Elektro- und Gartenwerkzeuge gewinnen immer mehr an Bedeutung. Dies gilt insbesondere für akkubetriebene Elektrowerkzeuge, die im professionellen Bereich mitunter sehr hohe Werte haben. Daher werden derartige Geräte häufig von Baustellen oder aus Bauwagen entwendet, was für die jeweilige Baufirma neben den Wiederbeschaffungskosten auch einen hohen administrativen Aufwand, beispielsweise zur Klärung von Versicherungsfragen, bedeuten kann. Aber auch im privaten Bereich steigt der Bedarf nach entsprechenden Diebstahlschutzsystemen .

Aus der DE 10 2010 041 309 A1 ist eine Diebstahlschutzvorrichtung für ein mobiles Gerät, insbesondere für ein mobiles Arbeitsgerät, mit einer Abschaltungseinheit bekannt, die dazu vorgesehen ist, das Gerät funktionsuntüchtig zu machen. Die Diebstahlschutzvorrichtung verfügt über eine Positionsortungseinheit zur Bestimmung von aktuellen geographischen Koordinaten und ist dazu vorgesehen, diese Koordination zu verarbeiten. Weiterhin weist die Diebstahlschutzvorrichtung eine Eingabeeinheit zur Eingabe eines zulässigen Arbeitsbereichs auf, innerhalb dem das mobile Gerät ohne Einschränkungen betrieben werden kann.

Die US 2014/159920 A1 zeigt einen Adapter für einen Wechselakku eines Elektrowerkzeugs, der Daten des Elektrowerkzeugs und/oder des Wechselakkus, wie z.B. das Datum und das Ergebnis der letzten Inspektion, die Anzahl der Ladevorgänge, den Gesundheitszustand des Wechselakkus, eine Seriennummer des Wechselakkus und/oder des Elektrowerkzeugs, etc. kabellos an ein externes Gerät, wie ein Smartphone, ein PDA, ein Tablet oder ein Notebook, weiterleiten kann. Unter anderem kann der Adapter auch als Diebstahlschutzmodul dienen, in dem er im Falle eines Diebstahls das Elektrowerkzeug und/oder den Wechselakku elektronisch sperrt, wenn kein entsprechendes Passwort eingegeben wird.

Die DE 10 2012 112 835 A1 offenbart ein System mit einer zentralen Lizenzverwaltungseinheit und zumindest einer Werkzeugvorrichtung, die zumindest eine Kommunikationsvorrichtung und eine Recheneinheit aufweist, wobei die Recheneinheit dazu vorgesehen ist, zumindest eine Funktion der Werkzeugvorrichtung von einer mittels der Kommunikationsvorrichtung von der zentralen Lizenzverwaltungseinheit empfangenen Information abhängig nutzbar zu schalten. Ferner ist aus der DE 10 2012 112 835 A1 bekannt, in die Werkzeugvorrichtung ein Ortbestimmungsmittel zur Ermittlung eines Standorts vorzusehen. Dabei kann die Kommunikationsvorrichtung direkt mit einem zentralen Rechner oder über ein mobiles Datengerät, beispielsweise ein Smartphone, mit dem zentralen Rechner Daten austauschen.

Aus dem Stand der Technik sind überdies Diebstahlschutzsysteme bekannt, die eine Elektrowerkzeugmaschine vor einer unberechtigten Benutzung oder einem Diebstahl schützen, indem mittels einer Fernbedienung ein Code an die Elektrowerkzeugmaschine zu deren Freigabe geschickt werden kann. Die Sperrung der Elektrowerkzeugmaschine erfolgt durch einen einfachen Tastendruck auf die Fernbedienung. Nachteilig an dieser Lösung ist die Notwendigkeit, stets die Fernbedienung zur Freigabe mitführen zu müssen.

Andere Lösungen sehen vor, die Seriennummer einer Elektrohandwerkzeugmaschine zusammen mit einer Kundennummer zu registrieren und den Eigentümer beim erneuten Auftauchen der Elektrohandwerkzeugmaschine nach einem Diebstahl zu informieren. Zusätzlich wird die Elektrohandwerkzeugmaschine beim Versuch einer unberechtigten Inbetriebnahme blockiert. Mittels einer firmenspezifischen Karte kann das Gerät aktiviert und anschließend über einen darauf abgestimmten Freischaltschlüssel freigeschaltet werden.

Weiterhin ist aus der US 2014/240125 A1 ein System zum Nachführen der Position einer Elektrohandwerkzeugmaschine, ein so genanntes Tracking-System, bekannt, das Daten der Elektrohandwerkzeugmaschine mit einem zentralen Server oder einer Cloud austauscht, um so eine Inventarisierung oder eine zeitnahe Wartung zu ermöglichen.

Es ist Aufgabe der Erfindung, ein universales Diebstahlschutzmodul für eine bereits vorhandene akkubetriebene Elektrowerkzeugmaschine bereitzustellen, das zum einen einfach nachrüstbar ist und zum anderen einen gegenüber dem Stand der Technik zuverlässigeren Schutz der akkubetriebenen Elektrowerkzeugmaschine gewährleisten soll.

### Vorteile der Erfindung

Die Erfindung betrifft ein Diebstahlschutzmodul für eine akkubetriebene Elektrowerkzeugmaschine, mit einer Positionsbestimmungseinheit zur Bestimmung einer geographischen Position des Diebstahlschutzmoduls und mit zumindest einer ersten Datenschnittstelle zur Übertragung von Daten, insbesondere Positionsdaten, an ein externes Gerät. Das Diebstahlschutzmodul ist als Adapter zwischen einer Akkuschnittstelle der Elektrowerkzeugmaschine und einem Wechselakku montierbar. Um eine unberechtigte Trennung des Diebstahlschutzmoduls von der Akkuschnittstelle der Elektrowerkzeugmaschine und/oder dem Wechselakku zu vermeiden, ist an dem Diebstahlschutzmodul ein Verriegelungs- oder Rastelement vorgesehen, das bei der Verbindung des Diebstahlschutzmoduls mit der Akkuschnittstelle bzw. dem Wechselakku mit einem entsprechenden Gegenrastelement der Akkuschnittstelle bzw. des Wechselakkus in Eingriff tritt. Erfindungsgemäß ist vorgesehen, dass eine Freigabe des Verriegelungs- oder Rastelements über das externe Gerät erfolgt. Indem der Formschluss zwischen Rastelement und Gegenrastelement gelöst wird, kann dann das Diebstahlschutzmodul von der Akkuschnittstelle und/oder dem Wechselakku getrennt werden. Dies ermöglicht eine besonders einfache und effiziente Bedienung bei gleichzeitiger Möglichkeit zur Einschränkung des Bedienerkreises.

In besonders vorteilhafter Weise kann das Diebstahlschutzmodul somit als Nachrüstteil einfach und ohne zusätzliches Werkzeug montiert werden. Auch neue Elektrowerkzeugmaschinen ohne Diebstahlschutzvorrichtungen lassen sich so entsprechend aufrüsten. Vorteil der Erfindung ist weiterhin, dass bei einem verlegten oder vermissten Gerät oder Wechselakku die genaue Position zu jeder Zeit erfasst werden kann. Die vorliegende Erfindung zeichnet sich damit insbesondere durch ihre Einfachheit, Modularität und Wiederverwendbarkeit aus. Für den Nutzer ergibt sich überdies der Vorteil einer Nutzung desselben Diebstahlschutzmoduls im Wechsel an verschiedenen Elektrowerkzeugmaschinen und/oder Wechselakkus.

Als "akkubetriebene Elektrowerkzeugmaschine" soll zum einen jedes Gerät zur Bearbeitung von Werkstücken mittels eines elektrisch angetriebenen Einsatzwerkzeugs verstanden werden. Somit kann die Elektrowerkzeugmaschine als Elektrohandwerkzeug oder als stationäre Elektrowerkzeugmaschine ausgebildet sein. Typische Elektrowerkzeugmaschinen sind in diesem Zusammenhang Hand- oder Standbohrmaschinen, Schrauber, Schlagbohrmaschinen, Bohrhämmer, Stichsägen, Kreissägen, Kappsägen, Hobel, Winkelschleifer, Schwingschleifer, Poliermaschinen oder dergleichen. Aber auch akkubetriebene Gartengeräte, wie Rasenmäher, Rasentrimmer, Astsägen oder dergleichen lassen sich unter dem Begriff akkubetriebene Elektrowerkzeugmaschine subsumieren. Weiterhin sollen aber auch Geräte als akkubetriebene Elektrowerkzeugmaschinen verstanden werden, die typischerweise auf Baustellen zum Einsatz kommen. Beispiele hierfür sind Baustellenstrahler, Heizgeräte, Gebläse, Pumpen, Messgeräte, Baustellenradios, etc. Als "Datenschnittstelle" soll insbesondere eine Schnittstelle zur kabellosen oder kabelgebundenen, uni- oder bidirektionalen Übertragung von Daten zwischen dem Diebstahlschutzmodul und dem externen Gerät verstanden werden. Dabei können für die kabelgebundene Übertragung USB-, Ethernet- oder andere Bussysteme zum Einsatz kommen. Ebenso sind proprietäre Bussysteme denkbar. Eine kabellose Übertragung erfolgt typischerweise mit Übertragungsstandards, wie WLAN, BT, BTLE, ZigBee, NFC, RFID, GSM, UMTS, LTE oder dergleichen. Selbstverständlich ist auch hier ein proprietäres Übertragungsprotokoll denkbar. Die Datenschnittstelle kann unter anderem auch zur Programmierung, zum Aufspielen von Updates sowie zum Auslesen oder ggf. Zurücksetzen des Diebstahlschutzmoduls über ein externes Gerät genutzt werden. Die "Positionsbestimmungseinheit" besteht typischerweise aus einem GPS-Empfänger, kann aber auch andere Ortungsdienste, wie Galileo oder Glonass umfassen. Zudem kann die Positionsbestimmung innerhalb von Gebäuden auf WLAN, Beacons oder bereits vorhandenen Infrastrukturelementen, wie mit BT oder WLAN ausgerüsteten Rauchmeldern oder dergleichen basieren. Selbstverständlich ist auch eine Kombinationen von Outdoor- und Indoor-Ortungsdiensten möglich. Ein "externes Gerät" beschreibt ein Gerät, das nicht mit der akkubetriebenen Elektrowerkzeugmaschine mechanisch verbunden ist. Das externe Gerät kommuniziert mit der ersten Datenschnittstelle über die bereits erwähnten Dienste und weist dazu selbst eine entsprechende Datenschnittstelle zur kabelgebundenen oder kabellosen Übertragung der von dem Diebstahlschutzmodul bereit gestellten Daten auf. Weiterhin umfasst das externe Gerät in bekannter Weise einen Prozessor und einen Arbeitsspeicher. Als externes Gerät kommt zum Beispiel ein Smartphone, eine Smartwatch, eine intelligente Brille, eine speziell für die Elektrowerkzeugmaschine ausgelegte Fernbedienung, aber auch ein PC, ein Server oder eine Datencloud in Frage. Das externe Gerät kann aber auch ein anderes Diebstahlschutzmodul sein, so dass mehrere Diebstahlschutzmodule direkt miteinander kommunizieren können. Unter einen "Wechselakku" soll zwar primär ein wieder aufladbarer Energiespeicher verstanden werden, der mit mindestens einer Li-Ion, NiCd, NiMH-Zelle oder dergleichen ausgerüstet ist, aber auch Brennstoffzellen und nicht wieder aufladbare Batteriezellen können den Wechselakku bilden.

Zur Verarbeitung und Weiterleitung der von der Positionsbestimmungseinheit ermittelten Positionsdaten weist das Diebstahlschutzmodul eine mit der zumindest einen ersten Datenschnittstelle verbundene Recheneinheit auf. Damit können die Daten in besonders vorteilhafter Weise autark von dem Diebstahlschutzmodul aufbereitet werden, ohne dass dazu bereits eine Datenverbindung zu einem externen Gerät notwendig wäre. Unter einer "Recheneinheit" soll jedwede Form von Prozessoren, z.B. Microcontroller, DSP, ASIC oder dergleichen zur Abarbeitung von Routinen, Programmen und/oder Skripten unabhängig von den verwendeten Codesequenzen und Protokollen inkl. notwendiger Speicherbausteine verstanden werden. Aber auch entsprechend diskrete und hybride Bauformen kommen als Recheneinheit in Frage. Da somit mehrere Diebstahlschutzmodule untereinander kommunizieren können, ist es möglich, ein weiteres Netzwerk aufzuspannen, um im Falle eines nicht vorhandenen Mobilfunktnetzes eine Kommunikation zu einem Server oder einer Cloud über eines oder mehrere der anderen Diebstahlschutzmodule aufzubauen.

Ergänzend ist eine weitere Datenschnittstelle zur Erfassung von durch die Elektrowerkzeugmaschine und/oder den Wechselakku erzeugten Betriebsdaten und/oder zur Beeinflussung eines Betriebszustands der Elektrowerkzeugmaschine und/oder des Wechselakkus vorgesehen. Durch die Möglichkeit der Ortung und Aktionseinleitung kann somit in vorteilhafter Weise einem Diebstahl der Elektrowerkzeugmaschine und/oder des Wechselakkus vorgebeugt und im Falle eines erfolgten Diebstahls die Aufklärung und Nachverfolgung erleichtert werden. Des Weiteren kann das Diebstahlschutzmodul zu einem Firmware- oder Software-Update der Elektrowerkzeugmaschine und/oder des Wechselakkus dienen. Ist in dem Diebstahlschutzmodul die grundsätzliche Funktion eines Datenloggers enthalten, können Geräte spezifische und applikationsbezogene Daten erfasst und intern oder extern gespeichert sowie aufbereitet werden. Es sei angemerkt, dass die weitere Datenschnittstelle dieselben kabelgebundenen oder kabellosen Übertragungsstandards und -verfahren nutzen kann, wie die bereits erwähnte erste Datenschnittstelle. Wegen der direkten Verbindung zwischen dem Diebstahlschutzmodul und der Elektrowerkzeugmaschine bzw. dem Wechselakku bietet sich hier aber insbesondere eine kabelgebundene Datenübertragung an. In diesem Zusammenhang sei erwähnt, dass der Begriff "kabelgebunden" auch solche Verbindungen umfasst, die direkt per Steckkontakte von einer Leiterplatte oder per Stanzgitter von der Elektrowerkzeugmaschine und/oder dem Wechselakku zum Diebstahlschutzmodul führen.

Weiterhin ist eine Sensoreinheit zur Erkennung einer Trennung des Diebstahlschutzmoduls von Akkuschnittstelle der Elektrowerkzeugmaschine und/oder dem Wechselakku vorgesehen. Dazu kann das Diebstahlschutzmodul beispielsweise in regelmäßigen Zeitabständen eine Datenfolge über die Akkuschnittstelle an die Elektrowerkzeugmaschine und/oder den Wechselakku schicken, welche von der Elektrowerkzeugmaschine und/oder dem Wechselakku quittiert wird. Bei Ausbleiben des Quittungssignals wird von einer unberechtigten Trennung ausgegangen. Im Falle einer kabellosen Datenübertragung zwischen dem Diebstahlschutzmodul und der Elektrowerkzeugmaschine und/oder dem Wechselakku kann im Falle einer Unterbrechung der Funkverbindung oder einer deutlichen Reduzierung der Sende- und Empfangsleistung ab einer bestimmten Dämpfung (RSSI) von einem nicht erlaubten Abstand zwischen der Elektrowerkzeugmaschine und dem Diebstahlschutzmodul und somit von einer mechanischen Trennung ausgegangen werden. Aktionen im Falle einer erkannten Trennung können z.B. sein, dass das Diebstahlschutzmodul über die erste Datenschnittstelle einen Alarm absetzt, so dass ein Wachdienst gerufen wird, eine Aufklärungsdrone gestartet wird oder dergleichen. Des Weiteren kann das Diebstahlschutzmodul den Vorfall über die weitere Datenschnittstelle an die Elektrowerkzeugmaschine und/oder den Wechselakku melden, um diese vor einer weiteren Nutzung zu sperren und damit unbrauchbar zu machen.

In einer weiteren Ausgestaltung der Erfindung ist ein Sensor zur Detektion einer Zustandsänderung des Diebstahlschutzmoduls, der Elektrowerkzeugmaschine und/oder des Wechselakkus vorgesehen, der die Einleitung einer Datenübertragung an das externe Gerät, an die Elektrowerkzeugmaschine und/oder den Wechselakku bei Über- oder Unterschreitung eines definierten Schwellwertes durch ein von dem Sensor erzeugtes Sensorsignal bewirkt. Dabei kann als Sensor zum Beispiel ein Bewegungssensor zur Detektion einer Bewegung des Diebstahlschutzmoduls zum Einsatz kommen. Wird das Diebstahlschutzmodul bewegt, kann es so die Bewegung erkennen und entsprechende Aktionen, wie beispielsweise das Absenden einer Positionsangabe an eine Cloud nach einer Ruhephase, das Aufwecken der Recheneinheit oder dergleichen, bewirken. In vorteilhafter Weise kann somit der Energieverbrauch des Diebstahlschutzmoduls minimiert werden. Zudem sind Strom-, Spannungs-, Temperatur- und weitere Umgebungssensoren zur Erfassung von Luftdruck, Luftfeuchtigkeit oder dergleichen denkbar, in deren Abhängigkeit bestimmte Betriebsarten der Elektrowerkzeugmaschine und/oder des Wechselakkus freigegeben oder gesperrt werden.

Weiterhin ist vorgesehen, dass das Diebstahlschutzmodul eine mit dem Wechselakku verbundene Energieschnittstelle, einen Energiespeicher und/oder eine Energieerzeugungseinheit zur Versorgung des Diebstahlschutzmoduls mit Energie aufweist. Insbesondere der Energiespeicher und die Energieerzeugungseinheit bieten den Vorteil, dass das Diebstahlschutzmodul auch im nicht mit dem Wechselakku verbundenen Zustand oder im Falle eines entladenen Wechselakkus mit Energie versorgt wird, so dass es die ihm angedachten Aufgaben jederzeit erfüllen kann. Als Energiespeicher kommen jedwede Art von Akkus, Batterien etc. in Frage. Als Energieerzeugungseinheit könnte zum Beispiel durch eine Solarzelle, eine Vorrichtung zur Rekuperation von Bewegungsenergie oder dergleichen dienen. Im Falle von in dem Diebstahlschutzmodul integrierten Akkus können diese bei vorhandener Energieversorgung über den Wechselakku und die Energieschnittstelle geladen werden. Hierzu wird ggf. die Spannung des Wechselakkus bei Bedarf über eine Energiewandlungseinheit und/oder eine Ladeeinheit für das Laden des integrierten Akkus angepasst. Dem Fachmann sind entsprechende Lade- und Energiewandlungseinheiten bekannt, so dass hier nicht weiter darauf eingegangen werden soll.

Mit Vorteil weist das Diebstahlschutzmodul ein Anzeigeelement zur Anzeige und/oder ein Bedienelement zur Änderung eines Status bzw. Modus des Diebstahlschutzmoduls, der Elektrowerkzeugmaschine und/oder des Wechselakkus auf. So kann in Verbindung mit der Positionsbestimmungseinheit beispielsweise ein vorgegebener Bereich definiert werden, der mittels Geofencing bei einem Verlassen einen Alarm erzeugt und eine der beschriebenen Aktionen einleitet. Das Anzeigeelement und/oder das Bedienelement können Teile eines User-Maschine-Interfaces (HMI), insbesondere eines Touchscreens, sein. Aber auch LED können die unterschiedlichen Betriebszustände des Diebstahlschutzmoduls, z.B. Alarm aktiv, System bereit, Netzwerk vorhanden, Batterie voll, Kopplung mit der Elektrowerkzeugmaschine und/oder dem Wechselakku vorhanden oder unterbrochen oder dergleichen anzeigen. Um Einstellungen an dem Diebstahlschutzmodul vornehmen zu können, sind alternativ oder ergänzend zum HMI Schalterelemente wie Schalter, kapazitive oder induktive Sensoren etc. denkbar.

Mit Vorteil weist das Diebstahlschutzmodul zudem eine mechanische Sicherungsvorrichtung, insbesondere ein mechanisches Schloss oder ein Zahlenschloss, und/oder eine elektromechanische Sicherungsvorrichtung, insbesondere ein Relais oder dergleichen, zum Schutz vor einem unberechtigten Entfernen des Diebstahlschutzmoduls von der Akkuschnittstelle der Elektrowerkzeugmaschine und/oder von dem Wechselakku auf.

In einer weiteren, vorteilhaften Ausgestaltung ist vorgesehen, dass das Diebstahlschutzmodul eine Aufnahmevorrichtung für zumindest zwei Wechselakkus mit gleicher oder unterschiedlicher Nennspannung aufweist. Das Diebstahlschutzmodul verfügt in diesem Fall über entsprechende Spannungswandler zur Anpassung der unterschiedlichen Wechselakku-Nennspannungen an die Erfordernisse der Elektrowerkzeugmaschine.

Weitere Vorteile der Erfindung ergeben sich durch die in den abhängigen Ansprüchen angegebenen Merkmale sowie aus der Zeichnung und der nachfolgenden Beschreibung.

### Ausführungsbeispiele

### Zeichnung

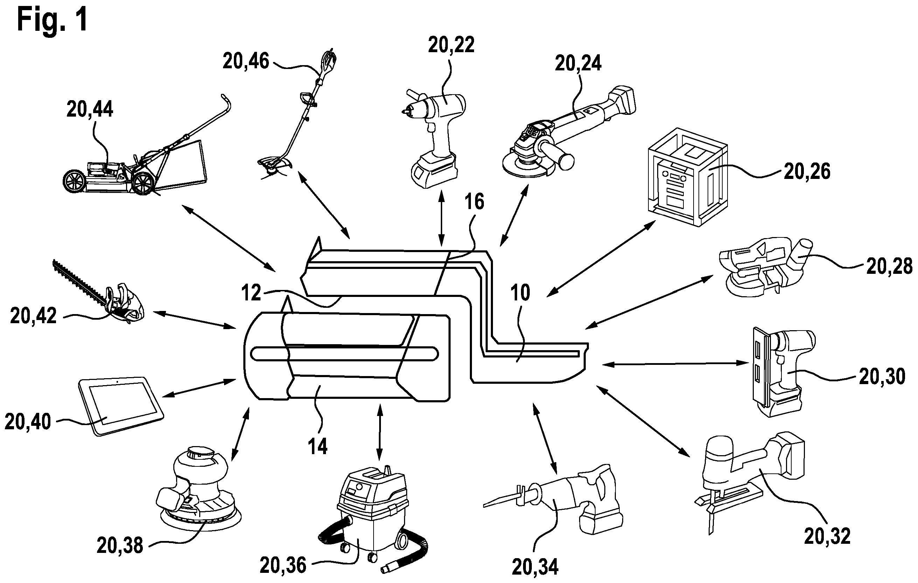

Die Erfindung wird im Folgenden anhand der Figuren 1 bis 6 beispielhaft erläutert, wobei gleiche Bezugszeichen in den Figuren auf gleiche Bestandteile mit einer gleichen Funktionsweise hindeuten. Einzelne Bestandteile der Ausführungsbeispiele wird der Fachmann bei Bedarf entsprechend kombinieren.

Es zeigen
- Fig. 1:: die Verwendung eines erfindungsgemäßen Diebstahlschutzmoduls für verschiedene Arten von akkubetriebenen Elektrowerkzeugmaschinen,
- Fig. 2:: die Verwendung eines erfindungsgemäßen Diebstahlschutzmoduls zur Übertragung von Daten an verschiedene Arten von externen Geräten in einem ersten Ausführungsbeispiel
- Fig. 3: das erfindungsgemäße Diebstahlschutzmodul in einer zweiten Ausführungsform im montierten Zustand zwischen einem Wechselakku und einer Akkuschnittstellen eines Akkubohrhammers,
- Fig. 4: das erfindungsgemäße Diebstahlschutzmodul in der zweiten Ausführungsform im demontierten Zustand zwischen dem Wechselakku und der Akkuschnittstellen des Akkubohrhammers,
- Fig. 5: das erfindungsgemäße Diebstahlschutzmodul in einer dritten Ausführungsform mit zumindest einer mechanischen Sicherungsvorrichtung und
- Fig. 6: das erfindungsgemäße Diebstahlschutzmodul in einer vierten Ausführungsform mit einer Aufnahmevorrichtung für zumindest zwei Wechselakkus.

### Beschreibung der Ausführungsbeispiele

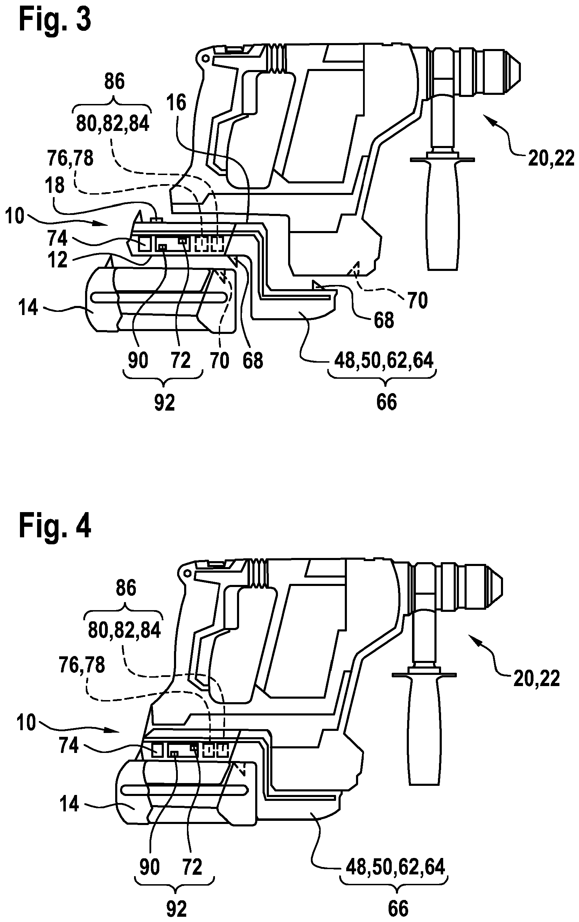

In Figur 1 ist ein erstes Ausführungsbeispiel des erfindungsgemäßen Diebstahlschutzmoduls 10 dargestellt. Es kann zum einen über eine Aufnahmevorrichtung 12 mit einem Wechselakku 14 und zum anderen über eine Schnittstelle 16 mit einer Akkuschnittstelle 18 (vgl. hierzu z.B. Figur 3) einer akkubetriebenen Elektrowerkzeugmaschine 20 verbunden werden. Wie bereits eingangs erwähnt, kann die akkubetriebene Elektrowerkzeugmaschine 20 beispielsweise als ein Schlagschrauber, eine Schlagbohrmaschine oder ein Bohrhammer 22, ein Winkelschleifer 24, ein Baustellenradio 26, eine Poliermaschine 28, ein Trockenbauschrauber 30, eine Stichsäge 32, eine Säbelsäge 34, einen Sauger 36, einer Fräse 38, einer Fernbedienung 40, einer Heckenschere 42, einem Rasenmäher 44 oder einem Trimmer 46 ausgebildet sein. Gundsätzlich sind alle Arten von akkubetriebenen Elektrowerkzeugmaschinen für die Verwendung des erfindungsgemäßen Diebstahlschutzmoduls 10 denkbar. Die Figur 1 ist daher nicht als einschränkend, sondern lediglich als ein mögliches Ausführungsbeispiel zu verstehen. Das Diebstahlschutzmodul 10 kann somit bevorzugt an bereits vorhandene Elektrowerkzeugmaschinen 20 und/oder Wechselakkus 14 montiert werden, so dass eine Nachrüstung durch einen Benutzer ohne großen Aufwand möglich ist. Ebenso ist es aber auch möglich, neu in den Handel kommende Elektrowerkzeugmaschinen 20, die bereits produziert wurden, herstellerseitig mit dem Diebstahlschutzmodul 10 auszurüsten.

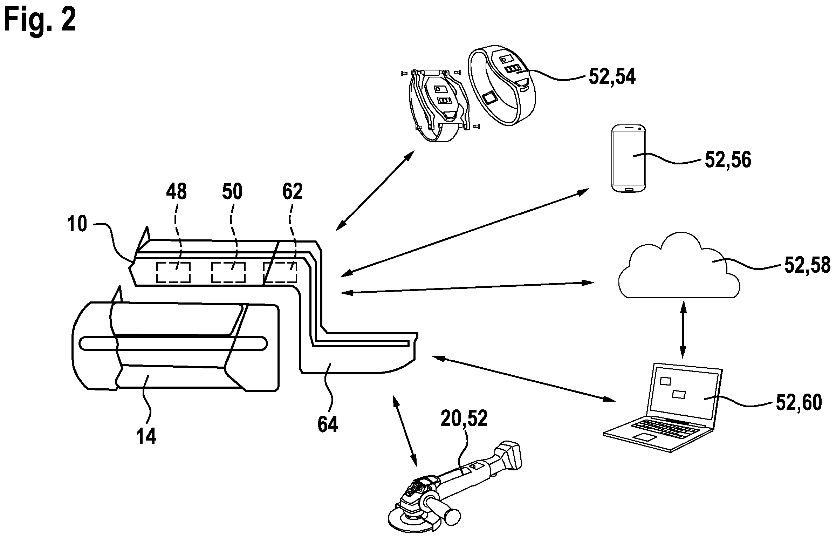

Gemäß eines ersten Ausführungsbeispiels des erfindungsgemäßen Diebstahlschutzmoduls 10 weist dieses nach Figur 2 eine Positionsbestimmungseinheit 48 zur Bestimmung einer geographischen Position des Diebstahlschutzmoduls 10 und zumindest eine erste Datenschnittstelle 50 zur Übertragung von Daten an ein externes Gerät 4 auf. Im gezeigten Beispiel arbeitet die Datenschnittstelle 50 kabellos. Die Übertragung erfolgt typischerweise mit Übertragungsstandards, wie WLAN, BT, BTLE, ZigBee, NFC, RFID, GSM, UMTS, LTE oder dergleichen. Selbstverständlich sind auch proprietäre Übertragungsprotokolle denkbar. Die Positionsbestimmungseinheit 48 besteht typischerweise aus einem GPS-Empfänger, kann aber auch andere Ortungsdienste, wie Galileo oder Glonass umfassen. Innerhalb von Gebäuden kann die Ortung aber auch auf WLAN, Beacons oder bereits vorhandenen Infrastrukturelementen, wie mit BT oder WLAN ausgerüsteten Rauchmeldern oder dergleichen basieren. Selbstverständlich ist auch eine Kombinationen von Outdoor- und Indoor-Ortungsdiensten möglich.

Als externes Gerät 52 zeigt Figur 2 exemplarisch eine Smartwatch 54, ein Smartphone 54, eine Datencloud 58 sowie einen PC 60. Als externes Gerät 52 kommen auch andere nicht mit der Elektrowerkzeugmaschine 20 mechanisch verbundene Geräte, wie zum Beispiel eine intelligente Brille, eine speziell für die Elektrowerkzeugmaschine 20 ausgelegte Fernbedienung 40, ein Server oder dergleichen in Frage. Das externe Gerät 52 kann aber auch ein anderes Diebstahlschutzmodul 10, eine weitere Elektrowerkzeugmaschine 20 oder ein weiterer Wechselakku 14 sein, so dass mehrere Diebstahlschutzmodule 10 direkt miteinander kommunizieren und ein Netzwerk zur Einbindung weiterer Diebstahlschutzmodule 10, Elektrowerkzeugmaschinen 20 und/oder externer Geräte 52 bilden können. Die externen Geräte 52 kommunizieren mit der Datenschnittstelle 50 über die bereits erwähnten Dienste und weisen dazu selbst eine entsprechende Datenschnittstelle zur kabelgebundenen oder kabellosen Übertragung der von dem Diebstahlschutzmodul 10 bereit gestellten Daten auf. Weiterhin umfassen die externen Geräte in bekannter Weise einen Prozessor und einen Arbeitsspeicher. Da die externen Geräte 52 dem Fachmann hinlänglich bekannt sind, soll jedoch an dieser Stelle nicht näher auf sie eingegangen werden.

In Verbindung mit dem externen Gerät 52 kann so zum Beispiel durch eine App oder ein Programm ein erlaubter Bereich definiert werden, innerhalb dem die Elektrowerkzeugmaschine 20 ohne Einschränkungen betrieben werden kann. Der erlaubte Bereich wird dem Diebstahlschutzmodul 10 über die erste Datenschnittstelle 50 mitgeteilt und von einer Recheneinheit 62 im Sinne eines Geofencing verarbeitet, so dass diese mittels der Positionsbestimmungseinheit 48 erkennen kann, ob der erlaubte Bereich verlassen wird. In diesem Fall meldet das Diebstahlschutzmodul 10 das Verlassen des erlaubten Bereichs als Alarm über die erste Datenschnittstelle 50 an das externe Gerät 52. Alternativ ist es aber auch möglich, dass die Erkennung über das Verlassen des erlaubten Bereichs durch das externe Geräts 52 erfolgt. Das Diebstahlschutzmodul 10 sendet in diesem Fall lediglich regelmäßig seine Positionsdaten an das externe Gerät 52, ohne diese selbst auszuwerten. Ein Wiedereintritt in den erlaubten Bereich kann auf entsprechende Weise verarbeitet werden.

Die erste Datenschnittstelle 50 kann überdies zur Programmierung, zum Aufspielen von Updates sowie zum Auslesen oder ggf. Zurücksetzen des Diebstahlschutzmoduls 10 über das externe Gerät 52 genutzt werden.

Weiterhin verfügt das Diebstahlschutzmodul 10 gemäß Figur 2 über zumindest eine weitere Datenschnittstelle 64, über die es mit der Elektrowerkzeugmaschine 20 und/oder dem Wechselakku 14 uni- oder bidirektional Daten austauschen kann. Die Art der Datenübertragung kann kabelgebunden oder kabellos erfolgen und die bereits für die erste Datenschnittstelle 50 beschriebenen Übertragungsstandards nutzen. So können z.B. Betriebsdaten, Fehlercodes etc. aus der Elektrowerkzeugmaschine 20 und/oder dem Wechselakku 14 an das Diebstahlschutzmodul 10 übertragen und dort von der Recheneinheit 62 verarbeitet, ausgewertet und ggf. über die erste Datenschnittstellen 50 an das externe Gerät 52 weitergeleitet werden. Zudem kann das Diebstahlschutzmodul 10 Updates für die Elektrowerkzeugmaschine 20 und/oder den Wechselakku 14 empfangen und an diese weiterleiten. Ist in dem Diebstahlschutzmodul 10 die grundsätzliche Funktion eines Datenloggers enthalten, können damit Geräte bezogene und applikationsbezogene Daten erfasst und intern oder extern gespeichert sowie ggf. aufbereitet werden.

Die zumindest eine weitere Datenschnittstelle 64 erlaubt zudem einen Eingriff in die Aktuatorik der Elektrowerkzeugmaschine 20 und/oder in die Steuerung des Wechselakkus 14, sofern diese entsprechend ausgestattet sind. Damit kann in Verbindung mit dem oben beschriebenen Geofencing zum Beispiel die maximale Leistung, die maximale Drehzahl und/oder das maximale Drehmoment eines Antriebs der Elektrowerkzeugmaschine 20 und/oder die maximale Anzahl an Lade- bzw. Entladezyklen des Wechselakkus 14 je nach Entfernung vom erlaubten Bereich bis zur absoluten Stilllegung reduziert werden. Auch ist es denkbar, die verschiedenen Betriebsmodus der Elektrowerkzeugmaschine 20 sukzessive einzuschränken.

Figur 3 zeigt ein zweites Ausführungsbeispiel eines erfindungsgemäßen Diebstahlschutzmoduls 10 für eine als Akkubohrhammer 22 ausgebildete Elektrowerkzeugmaschine 20 in einem nicht montierten Zustand, wobei der Übersichtlichkeit halber die Positionsbestimmungseinheit 48, die erste Datenschnittstelle 50, die Recheneinheit 62 und die zumindest eine weitere Datenschnittstelle 64 zu einem gemeinsamen Block 66 zusammengefasst wurden. In Figur 4 ist der montierte Zustand des Diebstahlschutzmoduls 10 an der Elektrowerkzeugmaschine 20 und dem Wechselakku 14 dargestellt.

Um eine unberechtigte Trennung des Diebstahlschutzmoduls 10 von der Akkuschnittstelle 18 der Elektrowerkzeugmaschine 20 und/oder dem Wechselakku 14 zu vermeiden, ist an dem Diebstahlschutzmodul 10 zumindest ein Verriegelungs- oder Rastelement 68 vorgesehen, das bei der Verbindung des Diebstahlschutzmoduls 10 mit der Akkuschnittstelle 18 bzw. dem Wechselakku 14 mit einem entsprechenden Gegenrastelement 70 der Akkuschnittstelle 18 bzw. des Wechselakkus 14 in Eingriff tritt. Um das Diebstahlschutzmodul 10 von der Akkuschnittstelle 18 und/oder dem Wechselakku 14 zu trennen, muss das Verriegelungs- oder Rastelement 68 freigegeben werden, so dass der Formschluss zwischen Rastelement 68 und Gegenrastelement 70 gelöst wird. Die Freigabe kann in vorteilhafter Weise über das externe Gerät 52 erfolgen. Alternativ oder ergänzend könnte die Freigabe aber auch über eine Code- bzw. PIN-Eingabe einer Bedieneinheit 72 oder einen Fingerabdrucksensor 74 des Diebstahlschutzmoduls 10 erfolgen

Im Falle einer Erkennung einer unberechtigten Trennung des Diebstahlschutzmoduls 10 von der Elektrowerkzeugmaschine 20 und/oder dem Wechselakku 14 wird von dem Diebstahlschutzmodul 10 eine Aktionen eingeleitet, wie zum Beispiel ein Absetzten eines Alarms an ein externes Gerät 52, das Alarmieren eines zuvor hinterlegten Wachdienstes oder gar das Starten einer Aufklärungsdrone. Ebenso kann bei erkannter Trennung vorgesehen sein, die Elektrowerkzeugmaschine 12 und/oder den Wechselakku 14 in ihren Funktionen einzuschränken oder vollständig zu sperren.

Die Trennung des Diebstahlschutzmoduls 10 von der Elektrowerkzeugmaschine 20 und/oder dem Wechselakku 14 kann beispielsweise mittels einer Sensoreinheit 76 dadurch erkannt werden, dass das Diebstahlschutzmodul 10 über die weitere Datenschnittstelle 64 an die Elektrowerkzeugmaschine 20 und/oder den Wechselakku 14 in regelmäßigen Intervallen eine Nachricht sendet, welche von der Elektrowerkzeugmaschine 20 bzw. dem Wechselakku 14 quittiert werden muss. Im Falle einer Trennung des Diebstahlschutzmoduls 10 von der Elektrowerkzeugmaschine 20 und/oder dem Wechselakku 14 bleibt dieses Quittungssignal aus und das Diebstahlschutzmodul 10 leitet die oben erwähnten Maßnahmen ein. Weiterhin kann bei bestehender Funkverbindung zwischen dem Diebstahlschutzmodul 10 und der Elektrowerkzeugmaschine 20 bzw. dem Wechselakku 14 über die zumindest eine weitere Datenschnittstell 64 anhand der messbaren Dämpfung (RSSI) auf den Abstand zwischen dem Diebstahlschutzmodul 10 und der Elektrowerkzeugmaschine 20 bzw. dem Wechselakkus 14 geschlossen werden. Unterschreitet der RSSI-Wert einen zuvor definierten Schwellwert, lässt dies auf eine unberechtigte Trennung schließen.

Weiterhin zeigt Figur 3 einen Sensor 78 zur Detektion einer Zustandsänderung des Diebstahlschutzmoduls 10, der Elektrowerkzeugmaschine 20 und/oder des Wechselakkus 14, der die Einleitung einer Datenübertragung an das externe Gerät 52, an die Elektrowerkzeugmaschine 20 und/der an den Wechselakku 14 bei Über- oder Unterschreitung eines definierten Schwellwertes durch ein von dem Sensor 78 erzeugtes Sensorsignal bewirkt. Der Sensor 78 ist im gezeigten Beispiel Bestandteil der Sensoreinheit 76, kann aber auch separat von dieser ausgebildet sein. Als Sensor 78 kommt zum Beispiel ein Bewegungssensor zur Detektion einer Bewegung des Diebstahlschutzmoduls 10 in Frage. Wird das Diebstahlschutzmodul 10 bewegt, kann es so die Bewegung erkennen und entsprechende Aktionen, wie beispielsweise das Absenden einer Positionsangabe an die Cloud 60 nach einer Ruhephase, das Aufwecken der Recheneinheit 64 oder dergleichen, bewirken. Zudem sind Strom-, Spannungs-, Temperatur- und weitere Umgebungssensoren zur Erfassung von Luftdruck, Luftfeuchtigkeit oder dergleichen denkbar, in deren Abhängigkeit bestimmte Betriebsarten der Elektrowerkzeugmaschine 20 und/oder des Wechselakkus 14 freigegeben oder gesperrt werden.

Das Diebstahlschutzmodul 10 verfügt über eine mit dem Wechselakku 14 verbundene Energieschnittstelle 80, einen Energiespeicher 82 und/oder eine Energieerzeugungseinheit 84 zur Versorgung des Diebstahlschutzmoduls 10 mit Energie. Energieschnittstelle 80, Energiespeicher 82 und Energieerzeugungseinheit 84 wurden in den Figuren 3 und 4 der Übersichtlichkeit halber in einem Block 86 zusammengefasst, können aber auch getrennt voneinander ausgebildet sein. Insbesondere der Energiespeicher 82 und die Energieerzeugungseinheit 84 erlauben es, das Diebstahlschutzmodul 10 auch im nicht mit dem Wechselakku 14 verbundenen Zustand oder im Falle eines entladenen Wechselakkus 14 mit Energie zu versorgen, so dass es die ihm angedachten Aufgaben jederzeit erfüllen kann. Als Energiespeicher 82 kommen jedwede Art von Akkus, Batterien etc. in Frage. Die Energieerzeugungseinheit 84 kann als eine Solarzelle, eine Vorrichtung zur Rekuperation von Bewegungsenergie oder dergleichen ausgebildet sein. Im Falle von Akkus können diese bei vorhandener Energieversorgung über die Energieschnittstelle 80 geladen werden. Hierzu kann beispielsweise die Spannung bei Bedarf über eine nicht gezeigte Energiewandlungseinheit und/oder eine nicht gezeigte Ladeeinheit für das Laden des integrierten Akkus angepasst. Dem Fachmann sind entsprechende Lade- und Energiewandlungseinheiten bekannt, so dass hier nicht weiter darauf eingegangen werden soll.

Das Diebstahlschutzmodul 10 weist neben dem Bedienelement 72, das auch zur Änderung eines Status bzw. Modus des Diebstahlschutzmoduls 10, der Elektrowerkzeugmaschine 20 und/oder des Wechselakkus 14 dient, auch ein Anzeigeelement 90 zur Anzeige der eingestellten Status bzw. Modus auf. So kann beispielsweise in Verbindung mit der Positionsbestimmungseinheit 48 unabhängig von einem externen Gerät 52 ein vorgegebener Bereich definiert werden, der mittels Geofencing bei einem Verlassen einen Alarm erzeugt und eine der zuvor beschriebenen Aktionen einleitet. Das Anzeigeelement 90 und das Bedienelement 72 sind im gezeigten Ausführungsbeispiel Teile eines User-Maschine-Interfaces (HMI) 92, insbesondere eines Touchscreens, können aber auch separat ausgebildet sein. Zudem sind alternativ oder ergänzend LED denkbar, die unterschiedlichen Betriebszustände des Diebstahlschutzmoduls 10, z.B. Alarm aktiv, System bereit, Netzwerk vorhanden, Akku voll, Kopplung mit der Elektrowerkzeugmaschine 20 und/oder dem Wechselakku 14 vorhanden oder unterbrochen oder dergleichen anzeigen. Um Einstellungen an dem Diebstahlschutzmodul 10 vornehmen zu können, sind alternativ oder ergänzend zum HMI 92 Schalterelemente wie Schalter, kapazitive oder induktive Sensoren etc. denkbar, auf die hier jedoch nicht im Detail eingegangen werden soll, da ihre Funktionsweise dem Fachmann bekannt ist.

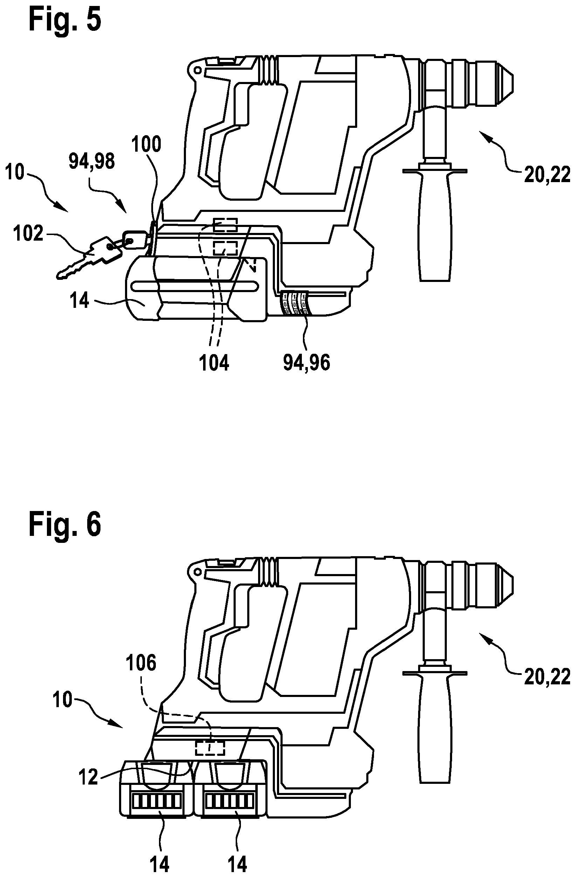

In den nachfolgenden Figuren 5 und 6 wurde der Übersichtlichkeit halber auf die in den Figuren 3 und 4 beschriebenen Details des Diebstahlschutzmoduls 10 verzichtet. Gleichwohl können sie Bestandteil des dargestellten Diebstahlschutzmoduls 10 in der dritten und vierten Ausführungsform sein.

Figur 5 zeigt das Diebstahlschutzmodul 10 mit zumindest einer mechanischen Sicherungsvorrichtung 94 in Gestalt eines Zahlenschlosses 96 und eines mechanisches Schlosses 98 mit einem Schließzylinder 100 und passenden Schlüsseln 102 zum Schutz vor einem unberechtigten Entfernen des Diebstahlschutzmoduls 10 von der Elektrowerkzeugmaschine 20 bzw. dem Wechselakku 14. Alternativ oder ergänzend ist aber auch eine elektromechanische Sicherungsvorrichtung 104, insbesondere ein Relais oder dergleichen, denkbar.

In Figur 6 ist das die Aufnahmevorrichtung 12 des Diebstahlschutzmoduls 10 derart ausgelegt, dass sie mindestens zwei Wechselakkus 14 mit gleicher oder unterschiedlicher Nennspannung aufnehmen kann. Für unterschiedliche Nennspannungen der Wechselakkus 14 weist das Diebstahlschutzmodul 10 einen entsprechenden Spannungswandler 104 zur Anpassung der unterschiedlichen Wechselakku-Nennspannungen an die Erfordernisse der Elektrowerkzeugmaschine 20 auf.

Es sei abschließend noch darauf hingewiesen, dass die gezeigten Ausführungsbeispiele weder auf die Figuren 1 bis 6 noch auf die dort gezeigte Form des Diebstahlschutzmoduls 10 bzw. die als Akkubohrhammer 22 ausgebildete Elektrowerkzeugmaschine 20 beschränkt sind. Zudem sei explizit erwähnt, dass die gezeigten Ausführungsbeispiele je nach Anforderung an das Diebstahlschutzmodul 10 frei kombinierbar sind. Dies gilt beispielsweise für die Verwendung des Diebstahlschutzmoduls 10 mit einem oder mehreren Wechselakkus 14 oder mit und ohne den gezeigten Sicherungsvorrichtungen.

## Patentansprüche

1. Diebstahlschutzmodul (10) für eine akkubetriebene Elektrowerkzeugmaschine (20), mit zumindest einer ersten Datenschnittstelle (50) zur Übertragung von Daten, insbesondere Positionsdaten, an ein externes Gerät (52) und mit einer Positionsbestimmungseinheit (48) zur Bestimmung einer geographischen Position des Diebstahlschutzmoduls (10), wobei das Diebstahlschutzmodul (10) als ein Adapter zwischen einer Akkuschnittstelle (18) der Elektrowerkzeugmaschine (20) und einem Wechselakku (14) montierbar ist und zumindest ein Verriegelungs- oder Rastelement (68) aufweist, das bei der Verbindung des Diebstahlschutzmoduls (10) mit der Akkuschnittstelle (18) der Elektrowerkzeugmaschine (20) bzw. dem Wechselakku (14) mit einem entsprechenden Gegenrastelement (70) der Akkuschnittstelle (18) bzw. des Wechselakkus (14) in Eingriff tritt, wobei eine Freigabe des zumindest einen Verriegelungs- oder Rastelements (68) über das externe Gerät (52) erfolgt.

2. Diebstahlschutzmodul (10) nach Anspruch 1, **gekennzeichnet durch** eine mit der zumindest einen ersten Datenschnittstelle (50) verbundenen Recheneinheit (62) zur Verarbeitung und Weiterleitung der von der Positionsbestimmungseinheit (48) ermittelten Positionsdaten.

3. Diebstahlschutzmodul (10) nach einem der vorhergehenden Ansprüche, **gekennzeichnet durch** eine weitere Datenschnittstelle (64) zur Erfassung von durch die Elektrowerkzeugmaschine (20) erzeugten Betriebsdaten und/oder zur Beeinflussung eines Betriebszustands der Elektrowerkzeugmaschine (20) und/oder des Wechselakkus (14).

4. Diebstahlschutzmodul (10) nach einem der vorhergehenden Ansprüche, **gekennzeichnet durch** eine Sensoreinheit (76) zur Erkennung einer Trennung des Diebstahlschutzmoduls (10) von der Akkuschnittstelle (18) der Elektrowerkzeugmaschine (20) und/oder von dem Wechselakku (14).

5. Diebstahlschutzmodul (10) nach einem der vorhergehenden Ansprüche, **gekennzeichnet durch** einen Sensor (78) zur Detektion einer Zustandsänderung des Diebstahlschutzmoduls (10), der Elektrowerkzeugmaschine (20) und/oder des Wechselakkus (14) und zur Einleitung einer Datenübertragung an das externe Gerät (52), an die Elektrowerkzeugmaschine (20) und/oder an den Wechselakku (14) bei Über- oder Unterschreitung eines definierten Schwellwertes durch ein von dem Sensor (78) erzeugtes Sensorsignal.

6. Diebstahlschutzmodul (10) nach Anspruch 5, **dadurch gekennzeichnet, dass** der Sensor (78) ein Bewegungssensor zur Detektion einer Bewegung des Diebstahlschutzmoduls (10) ist.

7. Diebstahlschutzmodul (10) nach einem der vorhergehenden Ansprüche, **gekennzeichnet durch** eine mit dem Wechselakku (14) verbundene Energieschnittstelle (80), einen Energiespeicher (82) und/oder eine Energieerzeugungseinheit (84) zur Versorgung des Diebstahlschutzmoduls (10) mit Energie.

8. Diebstahlschutzmodul (10) nach einem der vorhergehenden Ansprüche, **gekennzeichnet durch** ein Anzeigeelement (90) zur Anzeige und/oder ein Bedienelement (72) zur Änderung eines Status bzw. Modus des Diebstahlschutzmoduls (10), der Elektrowerkzeugmaschine (20) und/oder des Wechselakkus (14).

9. Diebstahlschutzmodul (10) nach Anspruch 8, **dadurch gekennzeichnet, dass** das Anzeigeelement (90) und/oder das Bedienelement (72) Teile eines User-Maschine-Interfaces (92), insbesondere eines Touchscreens, sind.

10. Diebstahlschutzmodul (10) nach einem der vorhergehenden Ansprüche, **dadurch gekennzeichnet, dass** das Diebstahlschutzmodul (10) eine mechanische Sicherungsvorrichtung (94), insbesondere ein mechanisches Schloss (98) oder ein Zahlenschloss (96), und/oder eine elektromechanische Sicherungsvorrichtung (104), insbesondere ein Relais oder dergleichen, aufweist zum Schutz vor einem unberechtigten Entfernen des Diebstahlschutzmoduls (10) von der Akkuschnittstelle (18) der Elektrowerkzeugmaschine (20) und/oder von dem Wechselakku (14).

11. Diebstahlschutzmodul (10) nach einem der vorhergehenden Ansprüche, **gekennzeichnet durch** eine Aufnahmevorrichtung (12) für zumindest zwei Wechselakkus (14) mit gleicher oder unterschiedlicher Nennspannung.

12. Akkubetriebene Elektrowerkzeugmaschine (20) mit einem Diebstahlschutzmodul (10) nach einem der vorhergehenden Ansprüche.

## Claims

1. Anti-theft module (10) for a battery-operated electric machine tool (20), comprising at least one first data interface (50) for transmitting data, in particular position data, to an external device (52), and comprising a position determination unit (48) for determining a geographical position of the anti-theft module (10), wherein the anti-theft module (10) is installable as an adapter between a rechargeable battery interface (18) of the electric machine tool (20) and a replaceable battery (14) and comprises at least one locking or latching element (68), which engages with a corresponding mating latching element (70) of the rechargeable battery interface (18) or the replaceable battery (14), when the anti-theft module (10) is connected to the rechargeable battery interface (18) of the electric machine tool (20) or the replaceable battery (14), wherein releasing the at least one locking or latching element (68) takes place via the external device (52).

2. Anti-theft module (10) according to Claim 1, **characterized by** a computing unit (62) which is connected to the at least one first data interface (50) for processing and forwarding the position data ascertained by the position determination unit (48).

3. Anti-theft module (10) according to either of the preceding claims, **characterized by** an additional data interface (64) for detecting operating data generated by the electric machine tool (20) and/or for influencing an operating state of the electric machine tool (20) and/or of the replaceable battery (14).

4. Anti-theft module (10) according to one of the preceding claims, **characterized by** a sensor unit (76) for detecting a disconnection of the anti-theft module (10) from the rechargeable battery interface (18) of the electric machine tool (20) and/or from the replaceable battery (14).

5. Anti-theft module (10) according to one of the preceding claims, **characterized by** a sensor (78) for detecting a change in state of the anti-theft module (10), the electric machine tool (20), and/or the replaceable battery (14), and for initiating a data transmission to the external device (52), to the electric machine tool (20) and/or to the replaceable battery (14), if a sensor signal generated by the sensor (78) exceeds or falls below a defined threshold value.

6. Anti-theft module (10) according to Claim 5, **characterized in that** the sensor (78) is a movement sensor for detecting movement of the anti-theft module (10) .

7. Anti-theft module (10) according to one of the preceding claims, **characterized by** an energy interface (80) which is connected to the replaceable battery (14), an energy storage device (82), and/or a power generation unit (84) for supplying the anti-theft module (10) with power.

8. Anti-theft module (10) according to one of the preceding claims, **characterized by** a display element (90) for displaying, and/or an operating element (72) for changing a status or mode of the anti-theft module (10), the electric machine tool (20), and/or the replaceable battery (14).

9. Anti-theft module (10) according to Claim 8, **characterized in that** the display element (90) and/or the operating element (72) are parts of a user-machine interface (92), in particular a touchscreen.

10. Anti-theft module (10) according to one of the preceding claims, **characterized in that** the anti-theft module (10) comprises a mechanical safety device (94), in particular a mechanical lock (98) or a combination lock (96), and/or an electromechanical safety device (104), in particular a relay or the like, for protection from unauthorized removal of the anti-theft module (10) from the rechargeable battery interface (18) of the electric machine tool (20) and/or from the replaceable battery (14).

11. Anti-theft module (10) according to one of the preceding claims, **characterized by** an accommodation device (12) for at least two replaceable batteries (14) having the same or a different nominal voltage.

12. Battery-operated electric machine tool (20) comprising an anti-theft module (10) according to one of the preceding claims.

## Revendications

1. Module de protection antivol (10) pour une machine-outil électrique (20) fonctionnant sur accumulateur, comprenant au moins une première interface de données (50) destinée à la transmission de données, en particulier de données de position, à un appareil externe (52), et comprenant une unité de détermination de position (48) destinée à déterminer une position géographique du module de protection antivol (10), le module de protection antivol (10) pouvant être monté en tant qu'adaptateur entre une interface d'accumulateur (18) de la machine-outil électrique (20) et un accumulateur interchangeable (14) et présentant au moins un élément de verrouillage ou d'enclenchement (68) qui, lorsque le module de protection antivol (10) est raccordé à l'interface d'accumulateur (18) de la machine-outil électrique (20) ou de l'accumulateur interchangeable (14), vient en prise avec un élément d'enclenchement complémentaire (70) correspondant de l'interface d'accumulateur (18) ou de l'accumulateur interchangeable (14), une libération dudit au moins un élément de verrouillage ou d'enclenchement (68) étant effectuée par l'intermédiaire de l'appareil externe (52).

2. Module de protection antivol (10) selon la revendication 1, **caractérisé par** une unité de calcul (62) reliée à ladite au moins une première interface de données (50) pour traiter et retransmettre les données de position déterminées par l'unité de détermination de position (48).

3. Module de protection antivol (10) selon l'une quelconque des revendications précédentes, **caractérisé par** une interface de données (64) supplémentaire pour acquérir des données de fonctionnement produites par la machine-outil électrique (20) et/ou pour affecter un état de fonctionnement de la machine-outil électrique (20) et/ou de l'accumulateur interchangeable (14).

4. Module de protection antivol (10) selon l'une quelconque des revendications précédentes, **caractérisé par** une unité de capteur (76) destinée à déceler une séparation du module de protection antivol (10) de l'interface d'accumulateur (18) de la machine-outil électrique (20) et/ou de l'accumulateur interchangeable (14) .

5. Module de protection antivol (10) selon l'une quelconque des revendications précédentes, **caractérisé par** un capteur (78) destiné à détecter un changement d'état du module de protection antivol (10), de la machine-outil électrique (20) et/ou de l'accumulateur interchangeable (14) et à déclencher une transmission de données vers l'appareil externe (52), vers la machine-outil électrique (20) et/ou vers l'accumulateur interchangeable (14) en cas de dépassement ou de soupassement d'une valeur seuil définie par un signal de capteur produit par le capteur (78).

6. Module de protection antivol (10) selon la revendication 5, **caractérisé en ce que** le capteur (78) est un capteur de mouvement destiné à détecter un mouvement du module de protection antivol (10).

7. Module de protection antivol (10) selon l'une quelconque des revendications précédentes, **caractérisé par** une interface d'énergie (80) reliée à l'accumulateur interchangeable (14), à une réserve d'énergie (82) et/ou à une unité de production d'énergie (84) pour alimenter en énergie le module de protection antivol (10).

8. Module de protection antivol (10) selon l'une quelconque des revendications précédentes, **caractérisé par** un élément d'affichage (90) pour l'affichage et/ou un élément de commande (72) pour la modification d'un statut ou d'un mode du module de protection antivol (10), de la machine-outil électrique (20) et/ou de l'accumulateur interchangeable (14).

9. Module de protection antivol (10) selon la revendication 8, **caractérisé en ce que** l'élément d'affichage (90) et/ou l'élément de commande (72) font partie d'une interface utilisateur-machine (92), en particulier d'un écran tactile.

10. Module de protection antivol (10) selon l'une quelconque des revendications précédentes, **caractérisé en ce que** le module de protection antivol (10) présente un dispositif de sécurité mécanique (94), en particulier une serrure mécanique (98) ou une serrure à combinaison (96), et/ou un dispositif de sécurité électromagnétique (104), en particulier un relais ou similaires, pour une protection d'un retrait non autorisé du module de protection antivol (10) de l'interface d'accumulateur (18) de la machine-outil électrique (20) et/ou de l'accumulateur interchangeable (14) .

11. Module de protection antivol (10) selon l'une quelconque des revendications précédentes, **caractérisé par** un dispositif de réception (12) pour au moins deux accumulateurs interchangeables (14) de tension nominale identique ou différente.

12. Machine-outil électrique (20) fonctionnant sur accumulateur, comprenant un module de protection antivol (10) selon l'une quelconque des revendications précédentes.
